# EUROPÄISCHE PATENTSCHRIFT

(11) **EP 1 564 037 B1**
(45) Veröffentlichungstag und Bekanntmachung des Hinweises auf die Patenterteilung: **13.02.2008**
(21) Anmeldenummer: 04026777.5
(22) Anmeldetag: 11.11.2004
(51) Int. Cl.: B60G 15/06

(54) **Lager für ein Dämpferelement eines Fahrzeuges**
Top mount bearing for a vehicle damper
Palier pour amortisseur d'un véhicule

(30) Priorität: 15.01.2004 DE 102004003132
(43) Veröffentlichungstag der Anmeldung: 17.08.2005
(73) Patentinhaber: Dr.Ing. h.c. F. Porsche Aktiengesellschaft, 70435 Stuttgart (DE)
(72) Erfinder: Germano, Francesco, 74321 Bietigheim-Bissingen (DE); Seibel, Maximilian, 71069 Sindelfingen (DE); Schulz, Achim, 75223 Niefern-Oeschelbronn (DE); Tardy-Tuch, Georg, 71272 Malmsheim (DE); Bergholz, Sven, 06918 Elster (DE)

(56) Entgegenhaltungen:
- EP-A- 0 268 393
- EP-A- 1 380 452
- DE-A1- 19 719 301
- DE-A1- 19 959 839
- DE-U1- 29 722 553
- US-A- 5 664 650

## Beschreibung

Die Erfindung betrifft eine Lager für ein Dämpferelement eines Fahrzeugs nach dem Oberbegriff des Patentanspruchs 1.

Aus der DE - OS 197 19 301 A1 ist bereits eine aufbauseitige Lagerung eines Stoßdämpfers bekannt, bei dem die Kolbenstange eines Stoßdämpfers in einem elastischen Puffermaterial gehalten ist, das seinerseits von einem an der Karosserie befestigten Lagergehäuse aufgenommen wird. Das Lagergehäuse ist nach einer Ausführung zweiteilig ausgebildet, wobei eine Oberschale über Rasthaken mit einer Unterschale bei der Herstellung des Lagergehäuses formschlüssig verbunden wird.

Aus der DE 101 05 458 A1 ist es für eine Verbindungsanordnung zwischen einem Dämpferelement, einer Fahrzeug - Radaufhängung und der Fahrzeug - Karosserie bekannt geworden, hierfür ein Elastomer - Element zu verwenden, das vor der Montage weich und im eingebauten Zustand erheblich komprimiert ist. Dabei sollen zwischen dem Elastomerelement und dem Karosserieblech keine Zwischenelemente vorgesehen sein.

Ausgehend von diesem Stand der Technik ist es Aufgabe der Erfindung, ein Lager für ein Dämpferelement eines Fahrzeuges zu schaffen, das einfach herstellbar und montierbar ist.

Erfindungsgemäß wird diese Aufgabe mit den Merkmalen des Patentanspruches 1 gelöst. Es wird vorgeschlagen, das Elastomerelement in einem als Lagerteller ausgebildeten Gehäuse anzuordnen, welches durch einen Deckel verschlossen ist. In vorteilhafter Weise kann diese Anordnung auf dem Dämpferelement, das beispielsweise Teile eines Federbeines ist, vormontiert werden, so dass Lagerung und Montage der kompletten Einheit vereinfacht sind. Der Lagerteller wird dabei durch einen Deckel abgedeckt, der so ausgebildet ist, dass er sich im montierten Zustand des Lagertellers an der Karosserie abstützt. Im nicht montierten Zustand hingegen liegt der Deckel nur lose auf dem Lagerteller und dem Elastomerelement auf, so dass das Elastomerelement im wesentlichen nicht vorgespannt ist. Hierdurch ist erreicht, dass das Elastomerelement einerseits während der Lagerung, beispielsweise eines vormontierten Federbeines mit Stützlager, nicht vorgespannt ist und somit keine Setzungerscheinungen auftreten können. Andererseits erfolgt die Vorspannung des Elastomerelementes bei der Montage des Lagertellers ohne weitere Maßnahmen, da sich der Deckel an der Karosserie abstützt und somit durch die Montage des Lagertellers an der Karosserie in seine Endlage gebracht wird.

Vorteilhafte Weiterbildungen der Erfindung sind in den Unteransprüchen beschrieben.

So wird vorgeschlagen, zwischen Deckel und Lagerteller Haltemittel vorzusehen. Derartige Haltemittel können beispielsweise Rastnasen, Bänder oder ähnliches sein. Aufgabe der Haltemittel ist, im nicht montierten Zustand den Deckel lagerichtig und verliersicher auf dem Lagerteller zu halten und somit zu verhindern, dass sich Deckel oder Elastomerelement während der Lagerung und des Transportes vom Lagerteller lösen können.

Weiterhin wird vorgeschlagen, den Deckel an seiner dem Elastomerelement zugewandten Seite so zu konturieren, dass eine gezielte bereichsweise Vorspannung des Elastomerlagers erreicht wird. Denkbar sind beispielsweise konische Innenkonturen, mit denen das Elastomerlager in radialer Richtung vorgespannt wird, oder wellenförmige Innenkonturen, durch die das Elastomerlager in bestimmten Bewegungsrichtungen eine höhere Vorspannung und damit eine höhere Steifigkeit erhält.

Der Deckel kann ferner an seiner der Karosserie zugewandten Seite einen umlaufenden Rand aufweisen. Dieser Rand dient als Dichtlippe, um die zur Aufnahme und Zentrierung des Lagers üblicherweise in der Karosserie vorgesehene Öffnung abzudichten. Diese Abdichtung wird durch das Elastomerlager ergänzt, so dass insgesamt eine vollständige Trennung zwischen Innen- und Außenraum der Karosserie erzielt ist. Bei dieser Ausführung ist es von besonderem Vorteil, wenn der Deckel aus Kunststoffmaterial gefertigt ist, da sich dabei eine gute Dichtwirkung erzielen lässt. Um die Steifigkeit des Deckels zu erhöhen kann es in diesem Falle vorgesehen sein, am Deckel eine metallische Verstärkungsplatte vorzusehen, die vorzugsweise innerhalb des Randes gehalten ist. In diesem Zusammenhang können innenseits des Randes Rastnasen vorgesehen sein, die die Verstärkungsplatte in ihrer Position halten.

Wenn unterschiedliche Deckel vorgesehen sind, die sich beispielsweise, wie zuvor beschrieben, hinsichtlich ihrer Innenkontur oder ihrer Bauhöhe (was ebenfalls zu einer unterschiedlichen Vorspannung des Elastomerelementes führt) unterscheiden, wird vorgeschlagen, zu besseren Unterscheidbarkeit der verschiedenen Deckel diese mit unterschiedlichen Farben zu kennzeichnen, insbesondere aus unterschiedlich eingefärbten Kunststoff zu fertigen.

Der Deckel kann darüber hinaus auch so ausgebildet sein, dass er Schrägstellungen des Lagertellers gegenüber der Karosserie, das heißt Abweichungen von einer parallelen Montage, ausgleicht. Hierzu ist die Anlagefläche des Deckels an der Karosserie um den selben Winkel geneigt wie die Anlagefläche des Lagertellers.

Das Elastomerelement besteht üblicherweise aus einem mit dem Dämpferelement verbundenen, festen Tragstück und einem elastischen Pufferelement, das das Tragstück zumindest so weit umschließt, dass zwischen Tragstück und Anlageflächen immer das Pufferelement vorgesehen ist. Um ein Verdrehen des Elastomerelementes im Lagerteller zu verhindern, sind innenseits des Lagertellers Vorsprünge vorgesehen, die zu Ausnehmungen an der Mantelfläche des Elastomerelementes korrespondieren. Dabei sind auch im Tragstück korrespondierende Ausnehmungen vorgesehen, so dass zwischen Tragstück und Lagerteller an jeder Stelle ausreichend Material des Pufferelementes vorgesehen ist und somit eine elastische Lagerung sicher gestellt ist.

Schließlich wird vorgeschlagen, dass das Tragstück an seiner Verbindungsfläche mit dem Dämpferelement mit einer Verdrehsicherung versehen ist. In Verbindung mit dem zuvor beschriebenen Formschluss zwischen Lagerteller und Elastomerelement ist auf diese Weise eine verdrehsichere Positionierung des Dämpferelementes, beispielsweise auf einer Kolbenstange eines Stoßdämpfers, gegenüber der Karosserie sicher gestellt. Gleichzeitig kann bei der Montage des Lagers auf dem Dämpferelement auf Montagehilfen wie Schlüsselflächen verzichtet werden, da beim Befestigen der Kolbenstange mit Hilfe einer Mutter über das Lager gekontert werden kann. In diesem Zusammenhang ist es von Vorteil, wenn die Verdrehsicherung aus einem Vorsprung in einer Bohrung des Tragstückes besteht und sich der Vorsprung sich nur über einen Teil dieser Bohrung erstreckt. So kann bei der Montage zunächst das Tragstück unabhängig von seiner Winkellage auf die Kolbenstange des Stoßdämpfers aufgesteckt und in einem zweiten Schritt durch Verdrehen in seine lagerichtige Position gebracht werden, während das Tragstück schon auf der Kolbenstange gehalten ist. Gleiches gilt, wenn das Tragstück zum Umschäumen in ein entsprechendes Werkzeug eingelegt werden soll. Auch hier ist die Positionierung vereinfacht, und das Tragstück kann beim Einsetzen in das Werkzeug positioniert werden, ohne dass die Gefahr bestünde, dass das Tragstück beim Ausrichten der Winkellage abrutscht und in das Werkzeug fällt.

Die Erfindung ist nachstehend anhand des in den Figuren dargestellten Ausführungsbeispieles näher beschrieben.

Es zeigen:
- Fig. 1: einen Hauptschnitt durch ein montiertes Lager an einer Karosserie,
- Fig. 2: einen Teilschnitt durch ein nicht montiertes Lager,
- Fig. 3: einen Hauptschnitt durch ein Unterteil eines Deckels des Lagers,
- Fig. 4: einen Hauptschnitt durch ein Elastomerelement des Lagers,
- Fig. 5: einen Schnitt nach der Linie V-V der Fig. 4, und
- Fig. 6: eine Explosionsdarstellung des Lagers.

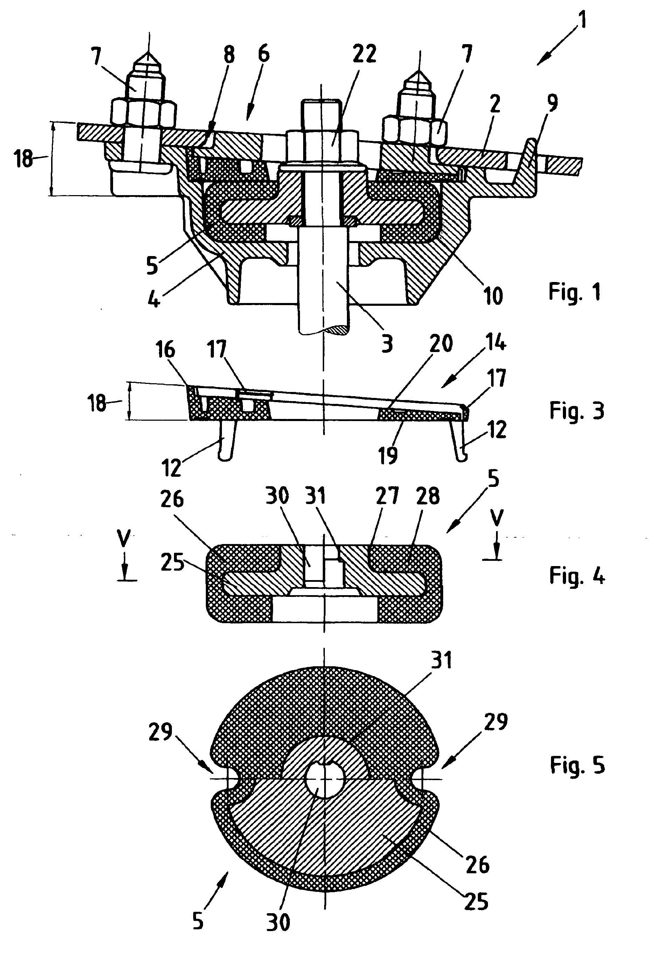

Fig. 1 zeigt einen Hauptschnitt durch ein Lager 1, das an einer Fahrzeugkarosserie, hier einem Karosserieblech 2, befestigt ist. Mit dem Lager 1 ist ein Dämpferelement des Fahrzeuges, hier ein Federbein, verbunden, von dem in der gezeigten Darstellung nur eine Kolbenstange 3 dargestellt ist. Das Lager 1 besteht aus einem Lagerteller 4, einem Elastomerelement 5 und einem Deckel 6. Der Lagerteller 4 ist an seinem Umfang mit Schrauben 7 zur Befestigung am Karosserieblech 2 versehen. Das Karosserieblech 2 weist neben Öffnungen zur Aufnahme der Schrauben 7 eine zentrale Durchtrittsöffnung 8 auf, durch die Teile des Lagers 1, hier ein Teil des Deckels 6 und Teile der Kolbenstange 3, hindurchtreten. Seitlich am Lagerteller 4 ist zusätzlich eine Nase 9 zur lagerichtigen Montage des Lagers 1 im Fahrzeug angeformt.

Das Elastomerelement 5 ist in einer Vertiefung 10 des Lagertellers 4 aufgenommen, wobei die Vertiefung 10 nach oben durch den Deckel 6 abgeschlossen wird, so dass das Elastomerelement 5 im dargestellten, montierten Zustand eingespannt gehalten ist. Gegenüber dem nicht montierten Zustand ist das Elastomerelement 5 in seiner Höhenrichtung, d.h. in Richtung der Kolbenstange 3, um etwa 30 % komprimiert.

Der Deckel 6 ist ohne weitere Befestigungselemente im Lagerteller 4 gehalten und dort durch eine Aufnahmeöffnung 11 positioniert. Da der Lagerteller 6 größer als die Durchtrittsöffnung 8 im Karosserieblech 2 ist, stützt sich der Deckel 6 am Karosserieblech 2 im montierten Zustand ab und ist auf diese Weise zwischen Lagerteller 4 und Karosserieblech 2 fixiert.

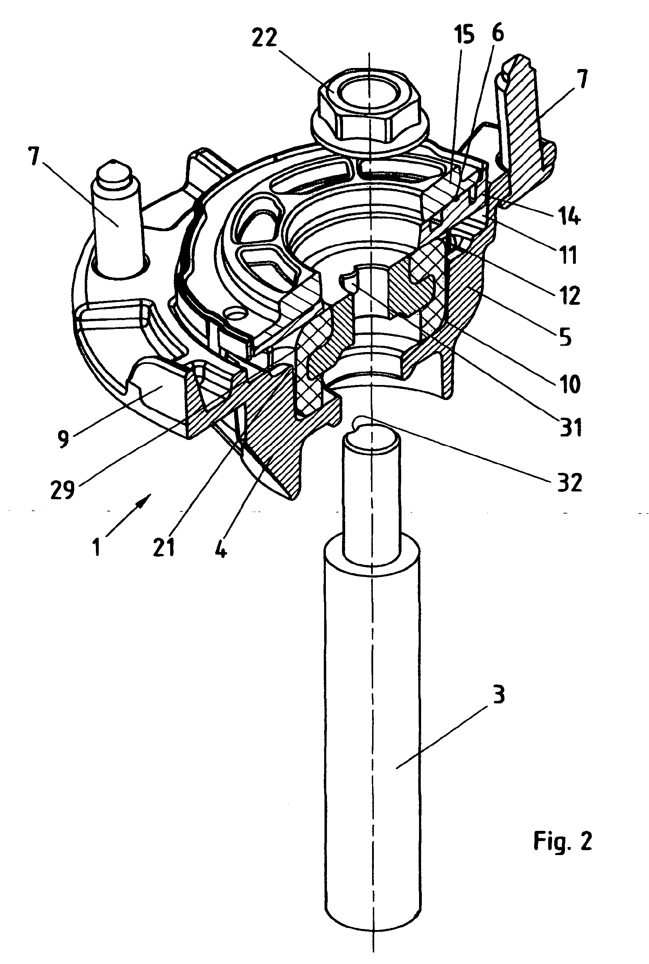

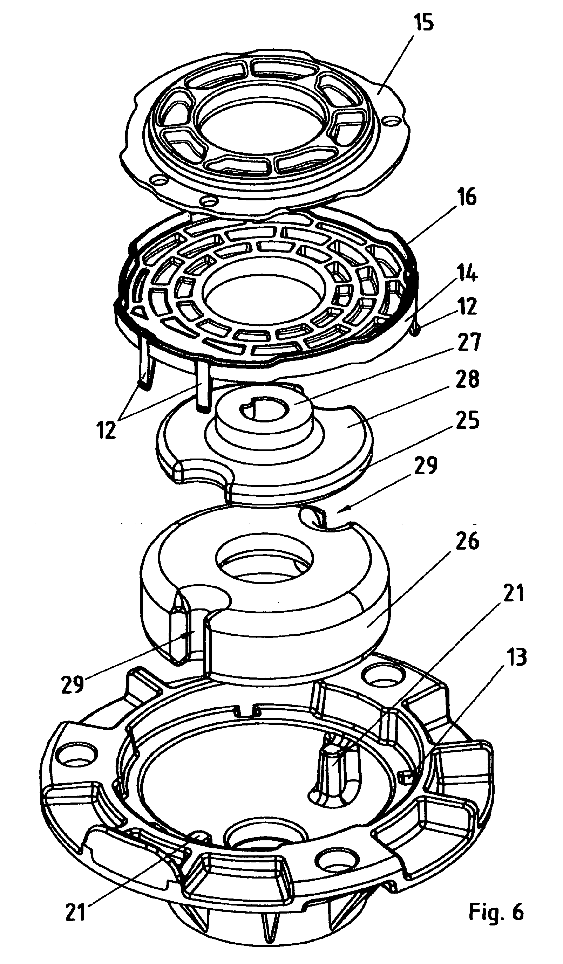

Fig. 2 zeigt das Lager 1 im nicht montierten Zustand. Das Elastomerelement 5 ist hierbei nicht vorgespannt, so dass der Deckel 6 aus der Ausnahme 11 abgehoben ist. Um den Deckel 6 am Lagerteller 4 verliersicher und lagerichtig zu halten, sind umlaufend am Rand des Deckels 6 Rasthaken 12 (siehe auch Fig. 6) vorgesehen, die durch korrespondierende Öffnungen 13 im Lagerteller 4 hindurchgreifen, um den Deckel 6 in der in Fig. 2 gezeigten Position zu halten.

Der Deckel 6 ist hier zweiteilig ausgeführt: er besteht aus einem aus Kunststoff gefertigten Unterteil 14 (siehe Fig. 3) sowie einer Druckplatte 15. Die Druckplatte liegt am Karosserieblech 2 an und verteilt die Kräfte über ihre gesamte Fläche. Das Unterteil 14 ist mit einem umlaufenden Rand 16 zur Aufnahme der Druckplatte 15 versehen. Am Rand 16 sind innenseitig Rastnasen 17 angeformt, die den Deckel 15 mit dem Unterteil 14 verbinden.

Der Rand 16 ragt ein wenig über den Deckel 15 hinaus und liegt somit im montierten Zustand des Lagers 1 umlaufend am Karosserieblech 2 an. Die Bauhöhe des Unterteiles 14 ist dabei so gewählt, dass der Rand 16 geringfügig höher als die Aufnahme 11 ausgebildet ist. An seiner Oberseite ist der Rand etwas verjüngt ausgebildet, so dass der überstehende Bereich des Randes bei Anlegen an das Karosserieblech 2 zumindest teilweise verformt werden kann. Auf diese Weise wird am Rand 16 umlaufend eine Dichtwirkung erzielt.

Wie aus Fig. 1 zu entnehmen ist, ist der Lagerteller 4 so geformt, dass das Elastomerelement 5 um einen Winkel 18 gegenüber dem Karosserieblech 2 angestellt ist. Das Unterteil 14 ist entsprechend so geformt, dass seine dem Elastomerelement 5 zugewandte Seite 19 um denselben Winkel 18 gegenüber seiner dem Deckel 6 zugewandten Seite 20 geneigt ist.

Das Elastomerelement 5 besteht aus einem festen Tragstück 25 (Fig. 4), das umlaufend an seiner Außenseite in einem elastischen Pufferelement 26, hier gefertigt aus Polyurethanschaum, aufgenommen ist. Das Tragstück 25 besteht dabei aus einem zylindrischen Mittelteil 27 und einem tellerförmigen Teil 28. Am äußeren Umfang des Elastomerelementes 5 sind zwei Ausnehmungen 29 vorgesehen (Fig. 5), die zu entsprechenden Vorsprüngen 21 in der Vertiefung 10 des Lagertellers 4 korrespondieren. Wie in Fig. 4 gezeigt sind die Ausnehmungen 29 nicht nur im Pufferelement 26, sondern auch im Tragstück 25 ausgebildet, so dass die Schichtstärke des Pufferelementes 26 auch im Bereich der Ausnehmungen 29 nicht vermindert ist.

Der zylindrische Teil 27 ist mit einer zentralen Bohrung 30 als Verbindungsfläche mit dem Dämpferelement, hier als zur Aufnahme der Kolbenstange 3, versehen. In die Bohrung 30 ragt als Verdrehsicherung ein Vorsprung 31 hinein, der sich jedoch, wie aus Fig. 4 zu entnehmen, nur über einen oberen Bereich der Länge der Bohrung 30 erstreckt. Bei der Montage des Lagers 1 auf die Kolbenstange 3 kann die Kolbenstange 3 zunächst in den unteren Bereich der Bohrung 30 eingeführt werden. Durch Verdrehen des Lagers 1 und damit auch des Elastomerelementes 5 auf der Kolbenstange 3 kann anschließend der Vorsprung 31 so positioniert werden, dass er in eine entsprechende Nut 32 der Dämpferstange 3 eingreift. Gleiches gilt, wenn beim Umschäumen des Tragstückes 25 dieses in ein entsprechendes Werkzeug eingelegt werden soll.

Um die Dämpferstange 3 mit dem Tragstück 25 zu verbinden ist eine Mutter 22 vorgesehen. Das zum Anziehen der Mutter 22 notwendige Kontermoment kann nun am Lagerteller 4 aufgebracht werden, da dieser über die Vorsprünge 21 und die Ausnehmungen 29 mit dem Elastomerelement 5 und das Elastomerelement 5 über den Vorsprung 31 und die Nut 32 mit der Kolbenstange 3 verdrehsicher verbunden ist.

### Bezugszeichenliste

- 1: Lager
- 2: Fahrzeugkarosserie, hier Karosserieblech
- 3: Kolbenstange
- 4: Lagerteller
- 5: Elastomerelement
- 6: Deckel
- 7: Schraube
- 8: zentrale Durchtrittsöffnung
- 9: Nase
- 10: Vertiefung
- 11: Aufnahmeöffnung
- 12: Rasthaken
- 13: Öffnung
- 14: Unterteil
- 15: Druckplatte
- 16: Rand
- 17: Rastnase
- 18: Winkel
- 19: Seite
- 20: Seite
- 25: Tragstück
- 26: elastisches Pufferelement
- 27: zylindrisches Mittelteil
- 28: tellerförmiges Teil
- 29: Ausnehmung
- 30: zentrale Bohrung
- 31: Vorsprung
- 32: Nut

## Patentansprüche

1. Lager (1) für ein Dämpferelement (3) eines Fahrzeuges über ein Elastomerelement (5) an einer Karosserie (2), wobei das Lager aus einem an der Karosserie zu befestigenden Lagerteller (4) und einem Deckel (6) besteht und das Elastomerelement in einer Vertiefung (10) im Lagerteller aufgenommen ist, **dadurch gekennzeichnet, dass** das Elastomerelement vor der Montage des Lagertellers an der karosserie weich und zwischen Deckel und Lagerteller im wesentlichen ohne Vorspannung gehalten ist und im eingebauten Zustand zwischen Deckel und Lagerteller komprimiert gehalten ist, wobei sich der Deckel an der Karosserie abstützt.

2. Lager für ein Dämpferelement eines Fahrzeuges nach Anspruch 1, **dadurch gekennzeichnet, dass** zwischen Deckel (6) und Lagerteller (4) Haltemittel (12) vorgesehen sind.

3. Lager für ein Dämpferelement eines Fahrzeuges nach Anspruch 1 oder 2, **dadurch gekennzeichnet, dass** der Deckel (6) an seiner dem Elastomerelement (5) zugewandten Seite mit einer Kontur zur gezielten bereichsweisen Vorspannung des Elastomerelementes versehen ist.

4. Lager für ein Dämpferelement eines Fahrzeuges nach Anspruch 1, 2 oder 3, **dadurch gekennzeichnet, dass** der Deckel (6) an seiner der Karosserie zugewandten Seite mit einem umlaufenden Rand (16) versehen ist.

5. Lager für ein Dämpferelement eines Fahrzeuges nach einem der vorstehenden Ansprüche, **dadurch gekennzeichnet, dass** verschiedene Deckel (6) vorgesehen sind, die sich im Hinblick auf die Vorspannung des Elastomerelementes (5) im eingebauten Zustand unterscheiden, wobei diese Deckel mit unterschiedlichen Farben gekennzeichnet sind.

6. Lager für ein Dämpferelement eines Fahrzeuges nach einem der vorstehenden Ansprüche, **dadurch gekennzeichnet, dass** der Lagerteller (4) so geformt ist, dass seine Anlagefläche an der Karosserie (2) und seine Anlagefläche für das Elastomerelement um einen ersten Winkel (18) gegeneinander angestellt sind, und der Deckel (6) zwischen seiner der Karosserie zugewandten Anlagefläche und seiner dem Elastomerelement zugewandten Anlagefläche (19) denselben Winkel (18) aufweist.

7. Lager für ein Dämpferelement eines Fahrzeuges nach einem der vorstehenden Ansprüche, **dadurch gekennzeichnet, dass** das Elastomerelement (5) aus einem festen Tragstück (25) und einem elastischen Pufferelement (26) besteht, wobei das Tragstück einerseits fest mit dem Dämpferelement (3) verbunden und andererseits allseits im Pufferelement aufgenommen ist, und das Elastomerelement an seinem äußeren Umfang wenigstens eine Ausnehmung (29) aufweist, die mit wenigstens einem Vorsprung (21) in der Vertiefung (10) im Lagerteller (4) korrespondiert, wobei die Ausnehmung auch im Tragstück ausgebildet ist.

8. Lager für ein Dämpferelement eines Fahrzeuges nach Anspruch 7, **dadurch gekennzeichnet, dass** das Tragstück (25) an seiner Verbindungsfläche (30) mit dem Dämpferelement (3) mit einer Verdrehsicherung (31) versehen ist.

9. Lager für ein Dämpferelement eines Fahrzeuges nach Anspruch 7, **dadurch gekennzeichnet, dass** das die Verdrehsicherung aus einem Vorsprung (31) in einer Bohrung (30) im Tragstück (25) besteht, und sich der Vorsprung nur über einen Teil der Bohrung erstreckt.

## Claims

1. A bearing (1) for a damper element (3) of a vehicle by way of an elastomer element (5) on a vehicle body (2), wherein the bearing consists of a bearing dish (4) to be fastened to the body and of a cover (6) and the elastomer element is received in a depression (10) in the bearing dish, **characterized in that** before the bearing dish is mounted on the body the elastomer element is held in a gentle manner and substantially without pre-tensioning between the cover and the bearing dish, and in the fitted state it is held compressed between the cover and the bearing dish, wherein the cover is supported on the body.

2. A bearing for a damper element of a vehicle according to Claim 1, **characterized in that** holding means (12) are provided between the cover (6) and the bearing dish (4).

3. A bearing for a damper element of a vehicle according to Claim 1 or 2, **characterized in that** on its side facing the elastomer element (5) the cover (6) is provided with a contour for the purposeful, local pre-tensioning of the elastomer element.

4. A bearing for a damper element of a vehicle according to Claim 1, 2 or 3, **characterized in that** on its side facing the body the cover (6) is provided with a continuous edge (16).

5. A bearing for a damper element of a vehicle according to any one of the preceding Claims, **characterized in that** different covers (6) are provided, which differ in terms of the pre-tensioning of the elastomer element (5) in the fitted state, the said covers being designated with different colours.

6. A bearing for a damper element of a vehicle according to any one of the preceding Claims, **characterized in that** the bearing dish (4) is shaped in such a way that its abutment face on the body (2) and its abutment face for the elastomer element are set against each other by a first angle (18), and the cover (6) has the same angle (18) between its abutment face towards the body and its abutment face (19) towards the elastomer element.

7. A bearing for a damper element of a vehicle according to any one of the preceding Claims, **characterized in that** the elastomer element (5) consists of a fixed support member (25) and a resilient buffer element (26), wherein the support member is connected to the damper element (3) in a fixed manner on the one hand and is received on all sides in the buffer element on the other hand, and on its external periphery the elastomer element has at least one recess (29) which corresponds to at least one projection (21) in the depression (10) in the bearing dish (4), wherein the recess is also formed in the support member.

8. A bearing for a damper element of a vehicle according to Claim 7, **characterized in that** the support member (25) is provided with a turning-prevention means (31) on its face (30) for connexion to the damper element (3).

9. A bearing for a damper element of a vehicle according to Claim 7, **characterized in that** the turning-prevention means consists of a projection (31) in a bore (30) in the support member (25), and the projection extends only over part of the bore.

## Revendications

1. Palier (1) pour un élément amortisseur (3) d'un véhicule sur un élément en élastomère (5) sur une carrosserie (2), le support étant constitué d'une coupelle de palier (4) devant être fixée sur la carrosserie et d'un couvercle (6), et l'élément en élastomère étant logé dans un renfoncement (10) dans la coupelle en palier, **caractérisé en ce qu'**avant le montage de la coupelle sur la carrosserie, l'élément en élastomère est souple et maintenu quasiment sans précontrainte entre le couvercle et la coupelle de palier, et qu'à l'état monté, il est maintenu comprimé entre le couvercle et la coupelle, le couvercle s'appuyant sur la carrosserie.

2. Support pour un élément amortisseur d'un véhicule selon la revendication 1, **caractérisé en ce que** des moyens de retenue (12) sont prévus entre le couvercle (6) et la coupelle (4).

3. Support pour un élément amortisseur d'un véhicule selon l'une quelconque des revendications 1 ou 2, **caractérisé en ce que** le couvercle (6) est doté sur son côté tourné vers l'élément en élastomère (5), d'un contour destiné à une précontrainte ciblée par zones de l'élément en élastomère.

4. Support pour un élément amortisseur d'un véhicule selon l'une quelconque des revendications 1, 2 ou 3, **caractérisé en ce que** le couvercle (6) présente un bord périphérique (16) sur son côté tourné vers la carrosserie.

5. Support pour un élément amortisseur d'un véhicule selon l'une quelconque des revendications précédentes, **caractérisé en ce que** sont prévus différents couvercles (6) qui se distinguent à l'état monté, sur le plan de la précontrainte de l'élément en élastomère (5), ces couvercles étant identifiés par différentes couleurs.

6. Support pour un élément amortisseur d'un véhicule selon l'une quelconque des revendications précédentes, **caractérisé en ce que** le support en assiette (4) est réalisé de manière à ce que sa surface d'appui sur la carrosserie (2) et sa surface d'appui pour l'élément en élastomère soient appliquées l'une contre l'autre en formant un angle (18) et que le couvercle (6) présente le même angle (18) entre sa surface d'appui tournée vers la carrosserie et sa surface d'appui (19) tournée vers l'élément en élastomère.

7. Support pour un élément amortisseur d'un véhicule selon l'une quelconque des revendications précédentes, **caractérisé en ce que** l'élément en élastomère (5) est constitué d'une pièce support (25) solide et d'un élément amortisseur (26) élastique, la pièce support étant d'une part reliée à l'élément amortisseur (3) et d'autre part logée de tous côtés dans l'élément amortisseur, et l'élément en élastomère présentant au moins un évidement (29) sur sa périphérie extérieure qui coïncide avec au moins une saillie (21) dans le renfoncement (10) dans la coupelle de palier (4), l'évidement étant également réalisé dans la pièce support.

8. Support pour un élément amortisseur d'un véhicule selon la revendication 7, **caractérisé en ce que** la pièce support (25) est munie d'un blocage en rotation (31) sur sa surface de raccordement (30) à l'élément amortisseur (3).

9. Support pour un élément amortisseur d'un véhicule selon la revendication 7, **caractérisé en ce que** le blocage en rotation est constitué d'une saillie (31) dans un perçage (30) dans la pièce support (25) et **en ce que** la saillie s'étend seulement sur une partie du perçage.
